# EUROPEAN PATENT SPECIFICATION

(11) **EP 1 231 412 B1**
(45) Date of publication and mention of the grant of the patent: **06.07.2005**
(21) Application number: 02388010.7
(22) Date of filing: 08.02.2002
(51) Int. Cl.: F16H 25/20

(54) **A linear actuator**
Linearantrieb
Verin linéaire

(30) Priority: 08.02.2001 DK 200100199
(43) Date of publication of application: 14.08.2002
(73) Proprietor: LINAK A/S, DK-6430 Nordborg (DK)
(72) Inventor: Hansen, Henry, 6310 Broager (DK)
(74) Representative: Pedersen, Soeren Skovgaard

(56) References cited:
- EP-A- 0 146 914
- EP-A- 0 577 541
- US-A- 2 541 529

## Description

The present invention relates to a linear actuator as stated in the introductory portion of claim 1.

Actuators of this type are known e g from EP 531 247 A1, EP 586 326 A1, EP 647 799 and EP 662 573 A1 as well as WO 98/30816, all belonging to Linak A/S. Mention should finally be made of EP 577 541 B1 to Linak A/S, which relates to an actuator having an emergency function (quick release), where the spindle may be disconnected from a drive motor, e g in order to be able to lower the head section of a hospital bed in a critical situation.

These actuators are used inter alia for incorporation in adjustable articles of furniture, e.g. beds and chairs as well as hospital and nursing equipment By way of example, reference may be made to EP 488 552 A1 to Huntleigh Technology plc, which relates to a hospital bed.

The invention, however, addresses the problem that an object gets jammed between the adjustable element of the structure and the stationary part, such as e.g. between a raisable head or foot section and the frame of a bed.

Various solutions have been provided to avoid damage to the structure and the object that has got jammed, and these may basically be divided into electrical and mechanical solutions, where the invention belongs under the last-mentioned category. Mechanical solutions may be based on overload couplings of various types arranged in the transmission. Document EP 0 146 914 A2 is considered to be the closest prior art. It shows a frictional coupling between an axial extension of the spindle and the output shaft of the transmission. In another embodiment, a frictional coupling is incorporated in the spindle nut itself, cf US 4 846 011. In the field of furniture and hospital and nursing equipment it is a requirement that the solution must be simple and reliable over an extended period of time as well as inexpensive. A solution satisfying these requirements is based on the finding that the adjustable elements are typically pressure-loaded The solution is that the actuation rod and the nut are connected to a splined connection, and that the end of the actuation rod rests loosely against a breast on the nut. If an object gets jammed in the structure, the actuation rod will stand still, while the nut will continue its axial movement until it has been pulled out of engagement with the actuation rod. To remove the object that has got jammed, the structure will typically be lifted, with the result that the actuation rod is pulled well above the nut. When the object has been freed from the structure, the structure will be released, causing the element and thereby the actuation rod to drop down on the nut with a greater or smaller force. Firstly, it is inconvenient to the user, and secondly it damages the nut. A further drawback of the embodiment is that it requires a relatively long mounting length.

The object of the invention is to provide a jamming protection which is simple and reliable as well as inexpensive, as mentioned above, but is not vitiated by the described drawbacks.

This is achieved according to the invention by constructing the actuator such that the spindle is axially movable in it so that the gear wheel on the end thereof is disengaged from the transmission upon movement in one direction. Expediently, the gear wheel is spring-loaded for engagement with the transmission. If an object gets jammed in the structure, the gear wheel is pulled out of engagement with the transmission, and the actuation rod will thereby stand still. This just requires a relatively small movement, and moreover a stop may be inserted so that the actuation rod cannot be moved further upwards. The mounting length may be made short, and the hard mechanical load caused by the re-engagement may be avoided at the same time.

Further features of the invention will be illustrated in connection with the following description of an embodiment of the invention with reference to the accompanying drawing, in which:
Fig. 1 shows a longitudinal section through an actuator, and
fig. 2 shows a detail view of the end of the spindle which is mounted in the cabinet of the actuator.

As will appear from the drawing, the main components of the actuator constitute a cabinet 1, a reversible electric motor 2, a transmission 3, a spindle 4, a spindle nut 5, and a tubular actuation rod 6 which, with its end, is threadedly fixed to the spindle nut, as well as an outer pipe 7 which, with its end, is threadedly fixed in the cabinet.

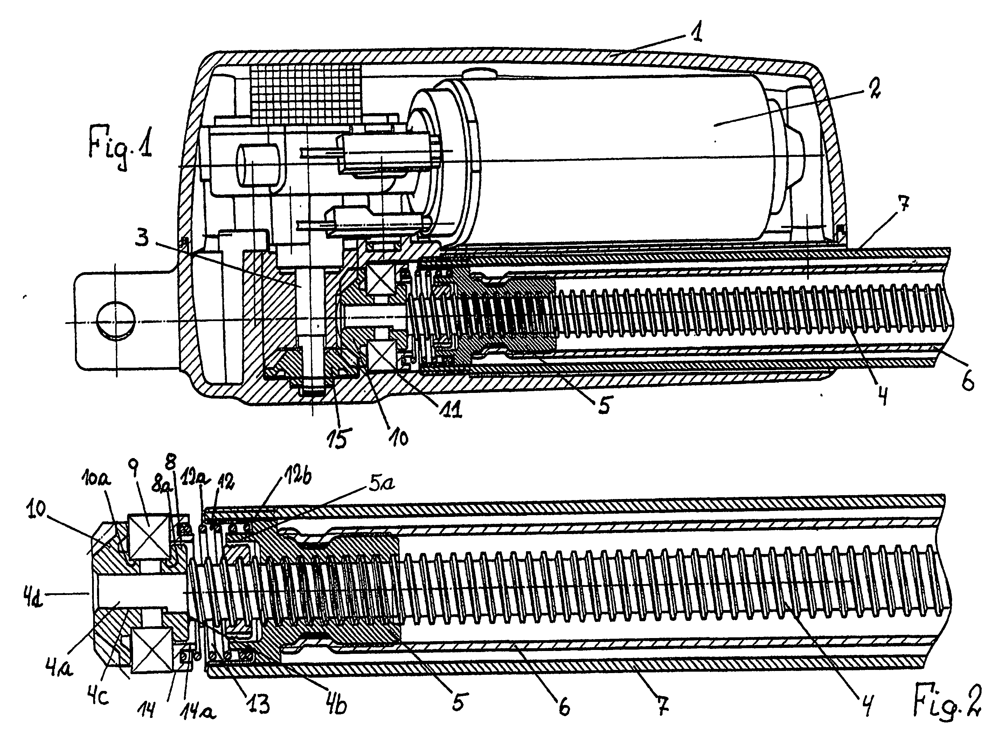

With reference to fig. 2, a disc 8, a bearing 9 and a gear wheel 10 are mounted on the end of the spindle. The end of the spindle is shaped as a smooth stem 4a on which the disc is arranged and rests against a breast 4b on the spindle. The gear wheel 10 is non-rotationally connected to the spindle at a plane face 4c, and is otherwise secured by riveting of a head 4d of the outer end of the stem. The bearing 9 is fixed between the gear wheel 10 and the disc 8 and centered with a stepped formation 10a, 8a on the gear wheel and the disc, respectively. The seat 11 for the bearing in the cabinet is shaped such that the bearing is allowed to perform a small axial movement.

A sleeve 12 is introduced at the end of the outer pipe 7 and is secured on the end of the outer pipe by an external collar 12a. A helical spring 13 is introduced in the sleeve 12 and rests with one end on an internal collar 12b in the sleeve. The spring 13 clamps against the side of the bearing 9. The spring 13 and the bearing 9 have interposed between them a spacing washer 14 which is seated with a cylindrical part 14a in the spring.

The mode of operation of the structure is generally as follows:

Since the outer pipe 7 is fixed in the cabinet 1, the spring 13 will press the entire spindle 4 and thereby the gear wheel 10 rearwards by its pressure on the bearing 9, so that the gear wheel engages an output gear wheel 15 on the transmission 3. Under usual conditions of operation where exclusively compressive forces are exerted on the actuation rod 6, the gear wheel 10 on the end of the spindle will be in engagement with the transmission 3.

If an object gets jammed in the structure so that the actuation rod 6 is blocked in its return movement (inward direction), a pull is exerted in the spindle 4 because it tries to screw itself forwards in the stationary spindle nut 5. The pull will propagate to the gear wheel 10 on the end of the spindle 4, which will then exert a pressure against the spring 13 via the bearing 9 and thereby be moved toward the end of the outer pipe 7. The connection to the transmission 3 will hereby be interrupted and the actuation rod 6 stands still. When the blocking object is removed, the spring 13 will press the gear wheel 10 into engagement with the transmission 3 again, and normal operational state will be restored.

A lift of the element in the structure which the actuator is to move, causes the actuator to be subjected to a tensile force, and the connection of the spindle with the transmission will thereby be interrupted, as described above. However, the actuation rod 6 is prevented from moving upwards, as the engagement of the bearing 9 with the outer pipe 7 puts a limit to such movement.

Thus, a simple and reliably operating jamming protection with a minimum mounting length is provided, which ensures that the actuation rod cannot be pulled out of engagement with the spindle nut 5. Further, the jamming projection is inexpensive.

The foregoing description relates to an embodiment in which the connection between the transmission 3 and the spindle 4 is formed by two identical conical gear wheels 10, 15. It will be appreciated that the invention may also be realized with a worm drive in which the worm wheel is secured on the end of the spindle, and in which an extension of the motor shaft is provided with a worm. The worm then constitutes the transmission, while the worm wheel may be moved out of engagement with it.

In the embodiment shown in the drawing, the bearing 9 is arranged between the gear wheel 10 and the outer pipe 7, but nothing prevents the bearing from being arranged on the other side of the gear wheel so that the spring 13 acts directly on the gear wheel, optionally via spacing washers. Of course, the spring may also be arranged on the opposite side of the gear wheel.

It is described above that the actuator is subjected to pressure, but the invention may also be applied where an actuator is intended for tensile loads.

## Claims

1. A linear actuator comprising a cabinet (1) having a reversible electric motor (2) which drives a spindle (4) via a transmission (3), wherein a gear wheel (10) is secured on the end of the spindle for engagement with the transmission (3, 15) under normal conditions of operation, a bearing (9) for the mounting of the end of the spindle (4) in the cabinet (1), and wherein a spindle nut (5) is non-rotationally secured on the spindle (4) and is connected with an actuation rod (6) extending in a guide (7), **character- ized in that** the spindle (4) is arranged axially movably such that the gear wheel (10) on the end thereof is disengaged from the transmission (3, 15) upon movement of the spindle in one direction.

2. An actuator according to claim 1, **characterized in that** the gear wheel (10) is spring-loaded (13) for engagement with the transmission.

3. An actuator according to claim 1 or 2, **characterized in that** the guide for the actuation rod (6) is formed by a pipe (7) secured in the cabinet (1), and that a sleeve (12) is secured at the end thereof, said sleeve having an internal collar (12b) against which the spring (13) rests with its one end.

4. An actuator according to claim 1, 2 or 3, **characterized in that** the internal end (5a) of the spindle nut (5) is shaped such that it may be accommodated in the end of the spring (13).

5. An actuator according to one of claims 1-4, **characterized in that** the bearing (9) is secured to the end of the spindle (4), and that this is mounted axially movably in the cabinet.

6. An actuator according to claim 5, **characterized in that** the bearing (9) is secured by fixing between the gear wheel (10) and a disc (8) secured on the spindle.

7. An actuator according to one of claims 1-5, **characterized in that** the gear wheel (10) is a conical gear wheel, and that this is in engagement with a conical output gear wheel (15) in the transmission (3).

8. An actuator according to one of claims 1-5, **characterized in that** the gear wheel (10) on the end of the spindle is formed by a worm wheel, and that the output stage on the transmission (3) is a worm.

## Patentansprüche

1. Linearantrieb umfassend ein Gehäuse (1) mit einem reversiblen elektrischen Motor (2), der über eine Kraftübertragungseinnchtung (3) eine Spindel (4) antreibt, wobei am Ende der Spindel ein Getrieberad (10) zum Eingriff mit der Kraftübertragungseinrichtung (3, 15) unter normalen Betriebsbedingungen befestigt ist, ein Lager (9) zum Anbringen des Endes der Spindel (4) in dem Gehäuse (1), und wobei eine Spindelmutter (5) nicht rotierbar an der Spindel (4) befestigt und mit einer Antriebsstange (6) verbunden ist, die sich in einer Führung (7) erstreckt, **dadurch gekennzeichnet, dass** die Spindel (4) axial beweglich angeordnet ist, so dass das Getrieberad (10) am Ende der Spmdel infolge Bewegung der Spindel in eine Richtung von der Kraftübertragungseinrichtung (3, 15) gelöst wird.

2. Antrieb nach Anspruch 1, **dadurch gekennzeichnet, dass** das Getrieberad (10) zum Eingriff mit der Kraftübertragungseinrichtung federbelastet (13) ist.

3. Antrieb nach Anspruch 1 oder 2, **dadurch gekennzeichnet, dass** die Führung für die Antriebsstange (6) durch ein Rohr (7) gebildet ist, das in dem Gehäuse (1) befestigt ist, und dass eine Hülse (12) an dem Ende des Rohrs befestigt ist, wobei die Hülse eine innere Einfassung (12b) aufweist, gegen die die Feder (13) mit ihrem einen Ende ruht.

4. Antrieb nach Anspruch 1, 2 oder 3, **dadurch gekennzeichnet, dass** das innere Ende (5a) der Spindelmutter (5) so geformt ist, dass es in dem Ende der Feder (13) aufnehmbar ist.

5. Antrieb nach einem der Ansprüche 1-4, **dadurch gekennzeichnet, dass** das Lager (9) an dem Ende der Spindel (4) befestigt ist und dass diese axial beweglich in dem Gehäuse angebracht ist.

6. Antrieb nach Anspruch 1, **dadurch gekennzeichnet, dass** das Lager (9) durch Festlegung zwischen dem Getrieberad (10) und einer an der Spindel befestigten Scheibe (8) befestigt ist.

7. Antrieb nach einem der Ansprüche 1-5, **dadurch gekennzeichnet, dass** das Getrieberad (10) ein konisches Getrieberad ist und sich dieses in Eingriff mit einem konischen Ausgangsgetrieberad (15) in der Kraftübertragungseinrichtung (3) befindet.

8. Antrieb nach einem der Ansprüche 1-5, **dadurch gekennzeichnet, dass** das Getrieberad (10) am Ende der Spmdel durch ein Schneckenrad gebildet ist und die Ausgangsstufe an der Kraftübertragungseinrichtung (3) eine Schnecke ist.

## Revendications

1. Actionneur linéaire comprenant un boîtier (1) ayant un moteur électrique réversible (2) qui entraîne une broche (4) via une transmission (3), dans lequel une roue dentée (10) est fixée sur l'extrémité de la broche pour l'engagement avec la transmission (3, 15) sous des conditions normales de fonctionnement, un palier (9) pour le montage de l'extrémité de la broche (4) dans le boîtier (1), et dans lequel un écrou de broche (5) est fixé de façon non rotative sur la broche (4) et est relié à une tige d'actionnement (6) s'étendant dans un guide (7),
**caractérisé en ce que** la broche (4) est agencée de façon axialement mobile de telle sorte que la roue dentée (10) sur l'extrémité de celle-ci est désengagée de la transmission (3, 15) lors du mouvement de la broche dans un sens.

2. Actionneur selon la revendication 1,
**caractérisé en ce que** la roue dentée (10) est chargée par ressort (13) pour l'engagement avec la transmission.

3. Actionneur selon la revendication 1 ou 2,
**caractérisé en ce que** le guide pour la tige d'actionnement (6) est formé par un tube (7) fixé dans le boîtier (1), et **en ce qu'**une douille (12) est fixée à l'extrémité de celui-ci, ladite douille ayant un collet interne (12b) contre lequel le ressort (13) repose avec l'une de ses extrémités.

4. Actionneur selon la revendication 1, 2 ou 3,
**caractérisé en ce que** l'extrémité interne (5a) de l'écrou de broche (5) est conformée de telle sorte qu'elle peut être reçue dans l'extrémité du ressort (13).

5. Actionneur selon une des revendications 1-4,
**caractérisé en ce que** le palier (9) est fixé à l'extrémité de la broche (4), et **en ce que** celle-ci est montée de façon axialement mobile dans le boîtier.

6. Actionneur selon la revendication 5,
**caractérisé en ce que** le palier (9) est immobilisé par fixation entre la roue dentée (10) et un disque (8) immobilisé sur la broche.

7. Actionneur selon une des revendications 1-5,
**caractérisé en ce que** la roue dentée (10) est une roue dentée conique, et **en ce que** celle-ci est en engagement avec une roue dentée conique de sortie (15) de la transmission (3).

8. Actionneur selon une des revendications 1-5,
**caractérisé en ce que** la roue dentée (10) sur l'extrémité de la broche est réalisée par une roue à vis sans fin, et **en ce que** l'étage de sortie sur la transmission (3) est une vis sans fin.
